# EUROPEAN PATENT SPECIFICATION

(11) **EP 3 633 278 B1**
(45) Date of publication and mention of the grant of the patent: **07.09.2022**
(21) Application number: 17911105.9
(22) Date of filing: 24.05.2017
(51) Int. Cl.: F24F 11/30, F25B 13/00, F25B 49/02

(54) **AIR CONDITIONER**
KLIMAANLAGE
CLIMATISEUR

(43) Date of publication of application: 08.04.2020
(73) Proprietor: Toshiba Carrier Corporation, Kawasaki-shi, Kanagawa 212-8585 (JP)
(72) Inventor: UESHIGE Jun, Fuji-shi Shizuoka 416-8521 (JP)
(74) Representative: Gramm, Lins & Partner Patent- und Rechtsanwälte PartGmbB
(86) International application number: PCT/JP2017/019345
(87) International publication number: WO 2018/216131

(56) References cited:
- JP-A- H04 240 355
- JP-A- H04 356 664
- JP-A- 2001 174 075
- JP-A- 2005 188 790
- JP-U- S5 954 061
- US-A1- 2015 247 660

## Description

### [Technical Field]

The present invention relates to an air conditioner with an indoor unit and an outdoor unit, the air conditioner comprising:
an expansion valve of the outdoor unit; a discharge temperature sensor that detects a discharge temperature of a refrigerant discharged from a compressor; a suction temperature sensor that detects a suction temperature of a refrigerant sucked by the compressor; a saturated vapor temperature sensor that detects a saturated vapor temperature of the refrigerant; a control unit that executes a first control process of adjusting a throttle of the expansion valve so that the discharge temperature of the compressor, which is included in the outdoor unit, becomes a predetermined target value when the discharge temperature of the refrigerant discharged by the compressor is equal to or higher than a threshold temperature and executes a second control process of adjusting the throttle of the expansion valve to maintain super heat of the refrigerant at a constant value when the discharge temperature of the compressor is lower than the threshold temperature,
wherein the super heat of the refrigerant is calculated as a difference of the suction temperature of the refrigerant sucked by the compressor and the saturated temperature of the refrigerant.

An air conditioner having these features is known from US 2015/247660 A1.

### [Background]

There is a separate-type air conditioner including an indoor unit and an outdoor unit. As methods for controlling that type of air conditioners, discharge temperature control for controlling an expansion valve so that a temperature of a refrigerant discharged by a compressor (which will be referred to as a "discharge temperature" below) provided in an outdoor unit follows a target value, and super heat (SH) control for controlling an expansion value to maintain super heat at a constant value are known. In the related art, the discharge temperature control is performed when a discharge temperature of a compressor is equal to or higher than a predetermined temperature, and the SH control is performed when a discharge temperature of a compressor is lower than the predetermined temperature.

Meanwhile, a heating operation performed in an environment in which an outside temperature is extremely low (e.g., -30 °C to -15 °C; which will be referred to as an "extremely low temperature environment" below) is an operation performed under a condition of a high compression ratio at which a difference in pressure of refrigerants between during condensation and during evaporation is large, and thus it is known that wear of components constituting the compressor is promoted and durability of the compressor deteriorates. However, in such a conventional control method, it is not likely to sufficiently curb deterioration in durability of the compressor.

### [Citation List]

### [Patent Literature]

[Patent Literature 1]
   Japanese Unexamined Patent Application, First Publication No. H4-240355
[Patent Literature 2]
   Japanese Unexamined Patent Application, First Publication No. 2003-156244

### [Summary of Invention]

### [Technical Problem]

An object of the present invention is to provide an air conditioner that can curb deterioration in durability of a compressor.

### [Solution to Problem]

The object is achieved by an air conditioner according to claim 1.

### [Brief Description of The Drawings]

Fig. 1 is a diagram illustrating a configuration example of an air conditioner 1 according to a first embodiment.
Fig. 2 is a block diagram illustrating a specific example of a functional configuration of a control unit 40 according to the first embodiment.
Fig. 3 is a table showing a specific example of threshold information according to the first embodiment.
Fig. 4 is a flowchart showing a flow of a process in which the air conditioner 1 according to the first embodiment switches a control mode during a heating operation.
Fig. 5 is a chart showing an operation example of the air conditioner 1 according to the first embodiment.
Fig. 6 is a diagram illustrating a specific example of a functional configuration of a control unit 40a according to a second embodiment.
Fig. 7 is a table showing a specific example of threshold information according to the second embodiment.
Fig. 8 is a flowchart showing a flow of a process in which the air conditioner 1a according to the second embodiment switches an operating frequency of a compressor 33.
Fig. 9 is a chart showing an operation example of the air conditioner 1a according to the second embodiment.

### [Description of Embodiments]

Air conditioners according to embodiments of the invention will be described below with reference to the drawings.

### (First embodiment)

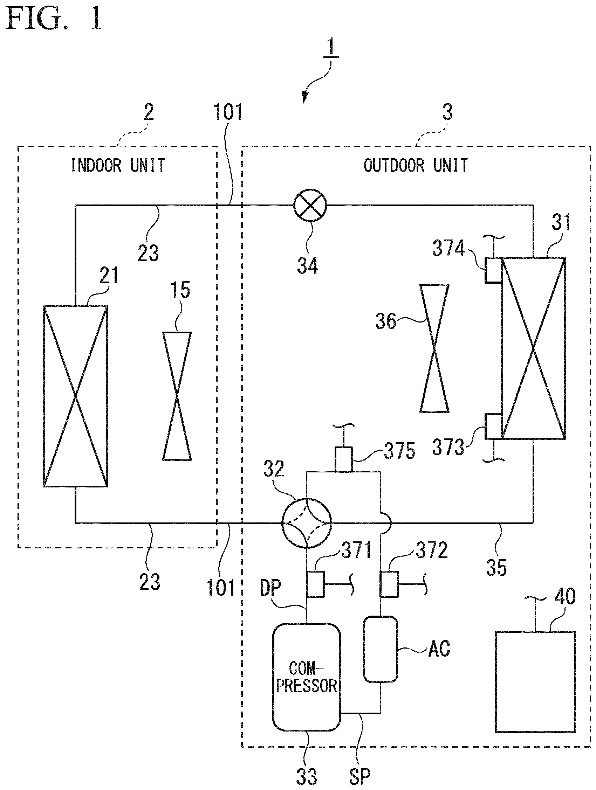

Fig. 1 is a diagram illustrating a configuration example of an air conditioner 1 according to a first embodiment. The air conditioner 1 includes an indoor unit 2 and an outdoor unit 3. The indoor unit 2 and the outdoor unit 3 are connected via crossover piping 101.

The indoor unit 2 includes an indoor heat exchanger 21, an indoor piping 23, and an indoor blower 24. The indoor heat exchanger 21 is, for example, a finned tube heat exchanger.

The indoor piping 23 connects the indoor heat exchanger 21 to the crossover piping 101. The indoor blower 24 has, for example, a centrifugal fan. The fan of the indoor blower 24 is disposed to face the indoor heat exchanger 21.

The outdoor unit 3 includes an outdoor heat exchanger 31, a four-way valve 32, a compressor 33, an outdoor expansion valve 34, an outdoor piping 35, an outdoor blower 36, a discharge temperature sensor 371, a suction temperature sensor 372, a heat exchanger temperature sensor 373, an outside temperature sensor 374 (temperature sensor), a saturated vapor temperature sensor 375, and a control unit 40. The control unit 40 controls operations of each functional unit included in the indoor unit 2 and the outdoor unit 3.

The outdoor heat exchanger 31 is, for example, a finned tube heat exchanger. The four-way valve 32 is a valve for switching a direction of a refrigerant flowing in the air conditioner 1 to a flow direction of a heating operation or a flow direction of a cooling operation or a defrosting operation.

The compressor 33 sucks a refrigerant from an inlet SP and the refrigerant is compressed in the compressor 33. The compressor 33 discharges the compressed refrigerant from the outlet DP to the outside. An accumulator AC for separating a refrigerant into a liquid refrigerant and a gas refrigerant is attached to the inlet SP of the compressor 33.

The outdoor expansion valve 34 is, for example, an electronic expansion valve (Pulse Motor Valve or a PMV). The outdoor expansion valve 34 can change a degree of opening. The outdoor piping 35 connects the outdoor heat exchanger 31, the four-way valve 32, the compressor 33, the outdoor expansion valve 34, and the accumulator AC. The outdoor blower 36 is configured similarly to the indoor blower 24.

The discharge temperature sensor 371 detects a temperature of the refrigerant discharged from the compressor 33. In this example, the discharge temperature sensor 371 detects a temperature of the refrigerant at the outlet DP of the compressor 33. A temperature of a refrigerant detected by the discharge temperature sensor 371 will be referred to as a discharge temperature below.

The suction temperature sensor 372 detects a temperature of a refrigerant sucked by the compressor 33. In this example, the suction temperature sensor 372 detects a temperature of a refrigerant at the inlet SP of the compressor 33. A temperature of a refrigerant detected by the suction temperature sensor 372 will be referred to as a suction temperature below.

The heat exchanger temperature sensor 373 is attached to, for example, piping of the outdoor heat exchanger 31, or the like. The heat exchanger temperature sensor 373 detects a temperature of the outdoor heat exchanger 31.

The outside temperature sensor 374 is disposed, for example, at a place that is not easily affected by radiant heat of the outdoor heat exchanger 31 or the like in the outdoor unit 3. The outside temperature sensor 374 detects a temperature of outside air of the outdoor unit 3. A temperature of outside air of the outdoor unit 3 detected by the outside temperature sensor 374 will be referred to simply as an outside air temperature below.

The saturated vapor temperature sensor 375 detects a saturated vapor temperature of a refrigerant. In this example, the saturated vapor temperature sensor 375 is disposed between the four-way valve 32 and the accumulator AC.

The four-way valve 32, the compressor 33, the outdoor expansion valve 34, the outdoor blower 36, the discharge temperature sensor 371, the suction temperature sensor 372, the heat exchanger temperature sensor 373, the outside temperature sensor 374, and the saturated vapor temperature sensor 375 are connected to the control unit 40. The four-way valve 32, the compressor 33, the outdoor expansion valve 34, and the outdoor blower 36 are controlled by the control unit 40.

The discharge temperature sensor 371, the suction temperature sensor 372, the heat exchanger temperature sensor 373, the outside temperature sensor 374, and the saturated vapor temperature sensor 375 transmit signals indicating detected temperatures to the control unit 40. Here, the saturated vapor temperature sensor 375 may be a pressure sensor that detects a saturated vapor pressure. In this case, the control unit 40 computes a saturated vapor temperature based on a saturated vapor pressure detected by the saturated vapor temperature sensor 375.

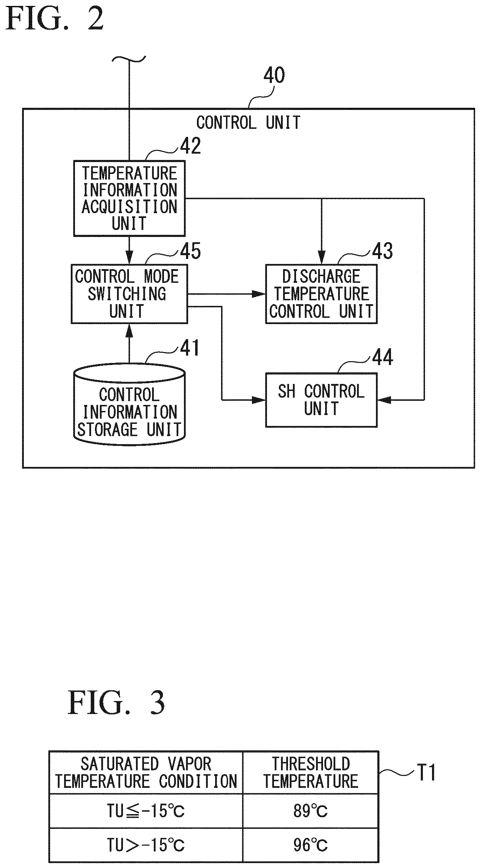

Fig. 2 is a block diagram illustrating a specific example of a functional configuration of the control unit 40 according to the first embodiment. The control unit 40 includes a central processing unit (CPU), a memory, an auxiliary storage device, and the like connected via a bus and executes a program. The control unit 40 functions as a device including a control information storage unit 41, a temperature information acquisition unit 42, a discharge temperature control unit 43, an SH control unit 44, and a control mode switching unit 45 by executing programs.

Further, some or all of functions of the control unit 40 may be realized by using hardware such as an application specific integrated circuit (ASIC), a programmable logic device (PLD), or a field programmable gate array (FPGA). A program may be recorded on a computer readable recording medium. A computer readable recording medium is a storage device, for example, a portable medium such as a flexible disk, a magneto-optical disc, a ROM, or a CO-ROM, or a hard disk built into a computer system. A program may be transmitted via a telecommunication circuit.

The control information storage unit 41 is configured using a storage device such as a magnetic hard disk device or a semiconductor storage device. For example, the control information storage unit 41 is configured using a non-volatile memory such as an electrically erasable programmable read-only memory (EEPROM). The control information storage unit 41 stores information about control of the corresponding device itself (which will be referred to as "control information" below).

The temperature information acquisition unit 42 acquires measurement information of diverse temperatures of the discharge temperature sensor 371, the suction temperature sensor 372, the heat exchanger temperature sensor 373, the outside temperature sensor 374, and the saturated vapor temperature sensor 375. The temperature information acquisition unit 42 outputs the acquired temperature information to the discharge temperature control unit 43, the SH control unit 44, and the control mode switching unit 45.

The discharge temperature control unit 43 executes discharge temperature control (a first control process) for adjusting a throttle of the outdoor expansion valve 34 so that a discharge temperature of the compressor 33 reaches a predetermined target value. The discharge temperature control unit 43 receives input of measurement information of the discharge temperature sensor 371.

The SH control unit 44 executes SH control (a second control process) of adjusting the throttle of the outdoor expansion valve 34 to maintain super heat (SH) of a refrigerant at a constant value. The SH control unit 44 receives input of measurement information of the suction temperature sensor 372 and the saturated vapor temperature sensor 375. The SH control unit 44 computes a value of super heat (which will be referred to as an "SH quantity" below) of a refrigerant based on the suction temperature and the saturated vapor temperature indicated by each piece of measurement information.

The control mode switching unit 45 switches a control mode during a heating operation to either a discharge temperature control mode in which discharge temperature control is performed or an SH control mode in which SH control is performed based on control information stored in the control information storage unit 41. Specifically, the control information includes information indicating a correspondence relation between saturated vapor temperatures of a refrigerant and thresholds of discharge temperatures (which will be referred to as a "threshold information" below). The control mode switching unit 45 acquires a threshold temperature corresponding to a measured saturated vapor temperature and switches a control mode based on the result obtained by comparing the acquired threshold temperature and a measurement value of a discharge temperature.

Fig. 3 is a table showing a specific example of threshold information according to the first embodiment. Threshold information is stored in, for example, the control information storage unit 41 in the form of a threshold information table T1 shown in Fig. 3. The threshold information table T1 has threshold information records for each saturated vapor temperature condition. Each of the threshold information records has a saturated vapor temperature condition and a value of each threshold temperature. Each saturated vapor temperature condition represents a condition for a saturated vapor temperature that is supposed to be satisfied when a corresponding threshold temperature is used. In addition, a threshold temperature represents a threshold of a discharge temperature to be used when the corresponding saturated vapor temperature condition is satisfied.

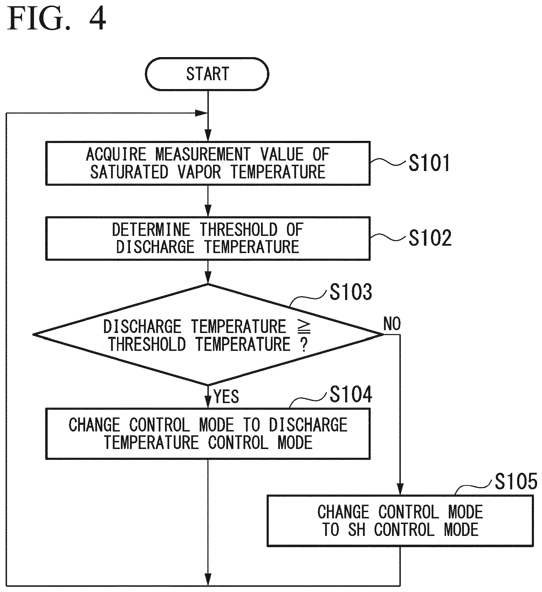

Fig. 4 is a flowchart showing a flow of a process in which the air conditioner 1 according to the first embodiment switches a control mode during a heating operation. First, the temperature information acquisition unit 42 acquires measurement information of various sensors (Step S101). The control mode switching unit 45 acquires the measurement information of various sensors from the temperature information acquisition unit 42. The control mode switching unit 45 determines a threshold of the discharge temperature corresponding to the current saturated vapor temperature of the refrigerant based on the acquired measurement information (Step S102).

In a case where control information is set like the threshold information table T1 as illustrated in Fig. 3, for example, the control mode switching unit 45 refers to the threshold information table T1 and selects a control information record representing the saturated vapor temperature condition satisfied by the current saturated vapor temperature of the refrigerant temperature. The control mode switching unit 45 acquires the value of the threshold temperature from the selected control information record. The control mode switching unit 45 determines the acquired value of the threshold temperature as a threshold of the discharge temperature corresponding to the current saturated vapor temperature of the refrigerant. In a case where a current saturated vapor temperature of the refrigerant is -20 °C, for example, the control mode switching unit 45 sets the threshold of the discharge temperature of the compressor 33 to 89 °C.

Next, the control mode switching unit 45 determines whether the current discharge temperature of the compressor 33 is equal to or higher than the threshold temperature based on the acquired measurement information (Step S103). If the discharge temperature of the compressor 33 is equal to or higher than the threshold temperature (YES in Step S103), the control mode switching unit 45 changes the control mode to the discharge temperature control mode (Step S104).

On the other hand, if the discharge temperature of the compressor 33 is lower than the threshold temperature (NO in Step S103), the control mode switching unit 45 changes the control mode to the SH control mode (Step S105). Further, in a case where a current control mode is the same as a control mode for change, the control mode switching unit 45 may not change the control mode.

The control mode switching unit 45 causes the process of switching a control mode to either the discharge temperature control mode or the SH control mode to return to Step S101 and repeatedly executes the series of processes from Step S101 to S105.

The air conditioner 1 according to the first embodiment configured as described above can change a threshold of a discharge temperature for deciding a control mode during a heating operation as the discharge temperature control mode or the SH control mode according to a saturated vapor temperature of a refrigerant. Having the above-described configuration, the air conditioner 1 can curb deterioration in durability of the compressor 33. Details thereof are as follows.

Generally, a heating operation in an environment in which an outside air temperature is extremely low (which will be referred to as an "extremely low temperature environment" below) is an operation under a condition that a difference in pressure of a refrigerant between a condensation time and an evaporation time is great (a high compression ratio condition). Thus, it is known that durability of the compressor 33 significantly deteriorates since a heating operation in an extremely low temperature environment is continued for a long period of time under the same operation conditions as those of a normal heating operation environment. Thus, if the control mode switching unit 45 changes a threshold of a discharge temperature for switching from the SH control mode to the discharge temperature control mode to a temperature according to saturated vapor temperature of a refrigerant, a target value of the discharge temperature during a heating operation in an extremely low temperature environment can be lowered and an increase of the discharge temperature can be reduced.

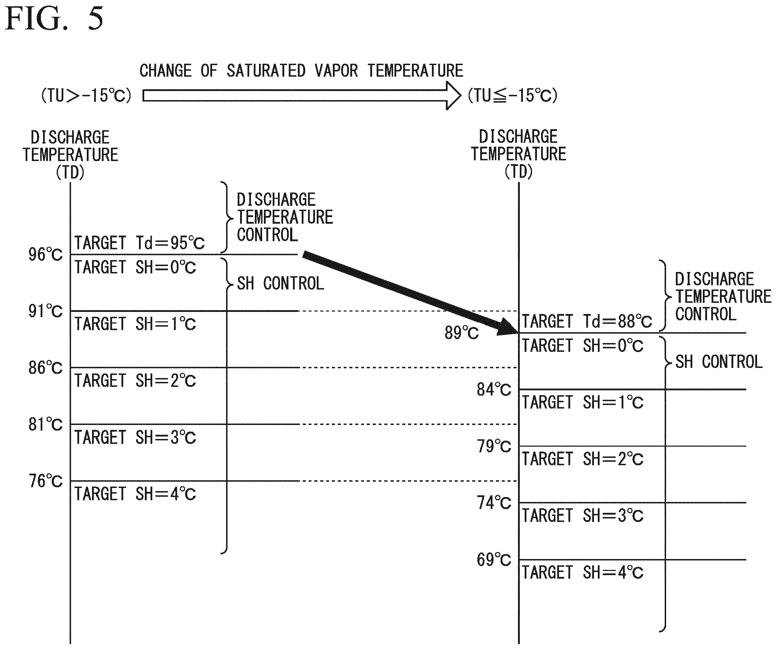

Fig. 5 is a chart showing an operation example of the air conditioner 1 according to the first embodiment. For example, Fig. 5 shows an operation example in which an environment in which an outside air temperature is lower than or equal to -15 °C is set as an extremely low temperature environment and threshold information is defined as shown in the example of Fig. 3. The left view of Fig. 5 shows that a control mode is switched at a threshold temperature of a discharge temperature (Td) of 96 °C in a situation in which a saturated vapor temperature (TU) is higher than -15 °C. Meanwhile, the right view of Fig. 5 shows that a control mode is switched at a threshold of a discharge temperature of 88 °C in a situation in which a saturated vapor temperature is lower than or equal to -15 °C (i.e., in an extremely low temperature environment).

Because of the switches of the control modes, loads imposed on the compressor 33 in the extremely low temperature environment can be reduced, and a product (air conditioner) used in a severe environment can be protected more effectively.

Further, although a refrigerant used for the air conditioner 1 of the present embodiment is not particularly limited, when a refrigerant such as R32 that has a large difference in pressure between during condensation and during evaporation is used, the above-described effects are expected to be greater than a case where a general refrigerant such as R410A is used. Thus, by using R32 for a refrigerant of the air conditioner 1, durability of the product can be effectively enhanced while reducing a load on the environment.

### (Second embodiment)

An air conditioner 1a of a second embodiment (not illustrated) is different from the air conditioner 1 of the first embodiment in that a control unit 40a is provided instead of the control unit 40.

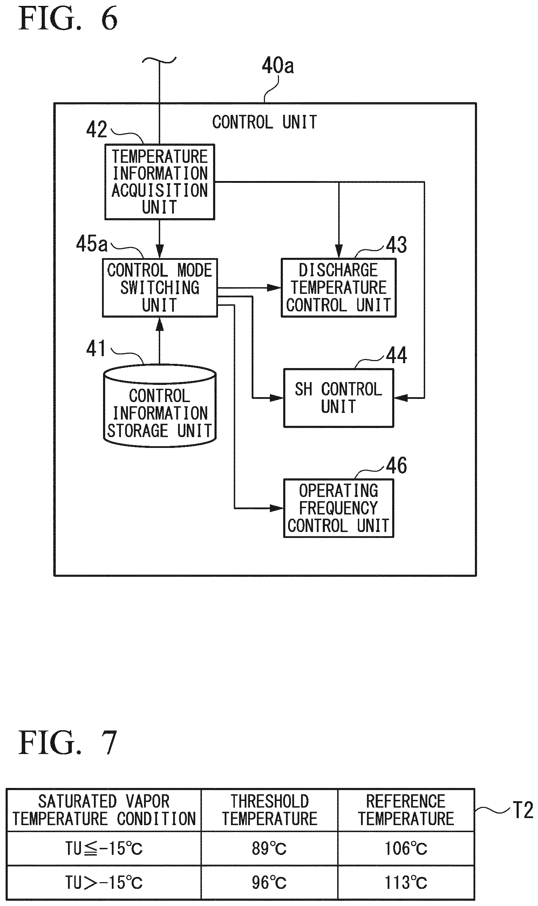

Fig. 6 is a diagram illustrating a specific example of a functional configuration of the control unit 40a according to the second embodiment. The control unit 40a is different from the control unit 40 of the first embodiment in that a control mode switching unit 45a is included instead of the control mode switching unit 45 and an operating frequency control unit 46 is further included. Since other functional units are similar to those of the first embodiment, the same reference numerals as those in Fig. 2 will be given to the functional units and description thereof will be omitted.

The operating frequency control unit 46 controls an operating frequency of the compressor 33 based on a discharge temperature of the compressor 33. Specifically, an operating frequency is a frequency of an AC voltage applied to a motor that drives the compressor 33, and a rotation rate of the motor is determined according to the operating frequency. For example, the operating frequency control unit 46 can change an operating frequency by controlling an inverter included in the motor.

The control mode switching unit 45a lowers an operating frequency of the compressor 33 so that a discharge temperature of the compressor 33 becomes a predetermined target value when the discharge temperature of the compressor 33 is equal to or higher than the target value even if the discharge temperature control unit 43 adjusts the throttle of the outdoor expansion valve 34.

Fig. 7 is a table showing a specific example of threshold information according to the second embodiment. The threshold information of the second embodiment is stored in the control information storage unit 41 in the form of, for example, a threshold information table T2 shown in Fig. 7. The threshold information table T2 is similar to the threshold information table T1 of Fig. 3 in that the threshold information table has threshold information records for each of saturated vapor temperature conditions, but is different from the threshold information table T2 in that each threshold information record has values of a saturated vapor temperature condition, a threshold temperature, and a reference temperature.

The reference temperature is a temperature that serves as a reference for determining a threshold of a discharge temperature that is used to determine whether to change an operating frequency. For example, in a case where an operating frequency of the compressor 33 is controlled in six stages including abnormal stop, normal down, slow down, hold, slow up, and normal up in a descending order of operating frequency, one of five discharge temperatures for separating two consecutive stages (which will be referred to as a "control temperatures" below) is set as a reference temperature. Fig. 7 shows an example in which a control temperature for separating the normal down stage and the slow down stage is set as a reference temperature.

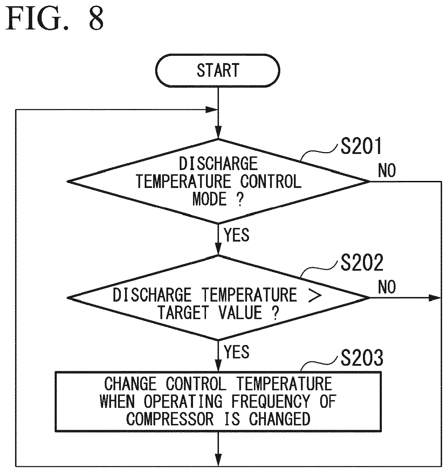

Fig. 8 is a flowchart showing a flow of a process in which the air conditioner 1a of the second embodiment switches an operational frequency of the compressor 33. First, the control mode switching unit 45a determines whether a current control mode is the discharge temperature control mode (Step S201).

For example, the control mode switching unit 45a can identify a current control mode based on a discharge temperature of the compressor 33. Specifically, the control mode switching unit 45a can identify the discharge temperature control mode as the current control mode if the discharge temperature of the compressor 33 is equal to or higher than a set value of threshold temperature at that time and identify the SH control mode as the current control mode if a discharge temperature thereof is lower than the set value.

If the current control mode is the discharge temperature control mode (YES in Step S201), the control mode switching unit 45a determines whether the discharge temperature of the compressor 33 is higher than a target value (Step S202). If the discharge temperature of the compressor 33 is higher than the target value (YES in Step S202), the control mode switching unit 45a changes a threshold (control temperature) of the discharge temperature when an operating frequency of the compressor 33 is changed (Step S203).

For example, in a case where control information is set as shown in the threshold information table T2 of Fig. 7, the control mode switching unit 45a refers to the threshold information table T2 and selects a control information record corresponding to the current control mode. The control mode switching unit 45a acquires a reference temperature value from the selected control information record. The control mode switching unit 45a determines the other four control temperatures based on the acquired reference temperature value (control temperature for separating the slow down stage and the normal down stage). For example, the other four control temperatures may be derived by adding a predetermined offset value to the reference temperature or derived using a predetermined formula based on the reference temperature.

The control mode switching unit 45a changes the set value of the current control temperature to another control temperature acquired based on the acquired reference temperature and the reference temperature and thereby changes the threshold of the discharge temperature when the operating frequency of the compressor 33 is changed.

Further, although the example in which the control temperature for the operating frequency is changed when the discharge temperature of the compressor 33 is equal to or higher than the target value even if the throttle of the outdoor expansion valve 34 is adjusted in the discharge temperature control mode has been described in Fig. 8, the control temperature may be changed according to a change of the threshold temperature. For example, the control temperature may be changed in Step S104 of Fig. 4.

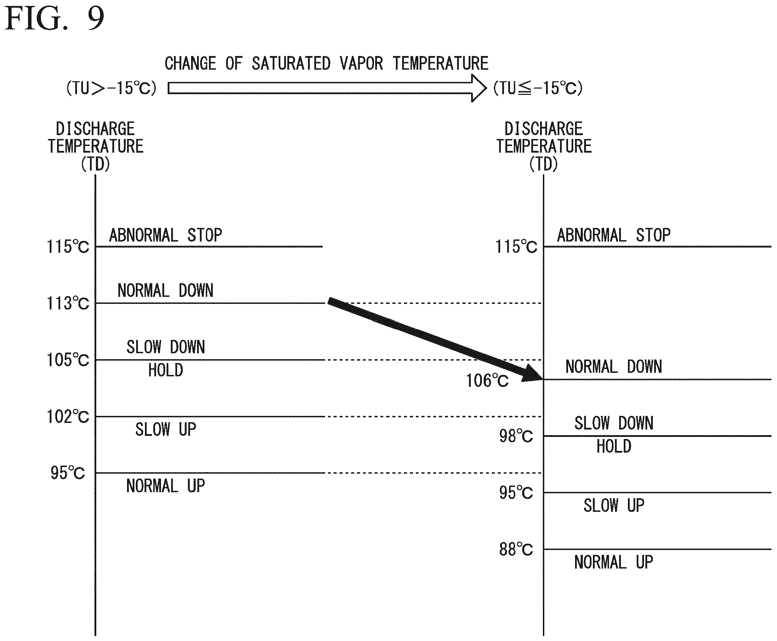

Fig. 9 is a chart showing an operation example of the air conditioner 1a according to the second embodiment. For example, Fig. 9 illustrates an operation example in which an environment with an outside air temperature lower than or equal to -15 °C is set as an extremely low temperature environment and threshold information is defined as in the example of Fig. 7. The left view of Fig. 9 shows that an operating frequency is controlled with a control temperature of normal down at 113 °C in a situation in which a saturated vapor temperature (TU) is higher than -15 °C. In this case, having 113 °C as a reference temperature, a control temperature for separating each of stages including slow down, hold, slow up, and normal up is determined.

Meanwhile, the right view of Fig. 9 shows that an operating frequency is controlled with a control temperature of the normal down stage at 106 °C in a situation in which a saturated vapor temperature is lower than or equal to -15 °C (i.e., in an extremely low temperature environment). In this case, having 106 °C as a reference temperature, a control temperature for separating each of stages including slow down, hold, slow up, and normal up is determined. Fig. 9 illustrates an example in which each control temperature is determined by a predetermined offset value for the reference temperature.

The air conditioner 1a of the second embodiment configured as described above changes a control temperature for an operating frequency at the time of an operation in an extremely low temperature environment. With the above-described configuration, the air conditioner 1a of the second embodiment can reduce a load on the compressor 33 in an extremely low temperature environment and can autonomously curb deterioration in durability of the device itself.

According to at least one of the above-described embodiments, deterioration in durability of the compressor can be curbed by providing the control unit that changes a threshold temperature of a discharge temperature of the compressor according to a saturated vapor temperature of a refrigerant when a mode is switched between discharge temperature control and SH control.

While certain embodiments have been described, these embodiments have been presented by way of example only, and are not intended to limit the scope of the invention.

Indeed, the novel embodiments described herein may be embodied in a variety of other forms; furthermore, various omissions, substitutions and changes in the form of the embodiments described herein may be made without departing from the scope of the invention which is solely defined by the appended claims.

## Claims

1. An air conditioner with an indoor unit (2) and an outdoor unit (3), the air conditioner comprising: a compressor (33) included in the outdoor unit (3);
an expansion valve (34) of the outdoor unit (3);
a discharge temperature sensor (371) that detects a discharge temperature of a refrigerant discharged from the compressor (33);
a suction temperature sensor (372) that detects a suction temperature of a refrigerant sucked by the compressor (33);
a saturated vapor temperature sensor (375) that detects a saturated vapor temperature of the refrigerant;
a control unit (40) that executes a first control process of adjusting a throttle of the expansion valve (34) so that the discharge temperature of the compressor (33) becomes a predetermined target value when the discharge temperature of the refrigerant discharged by the compressor (33) is equal to or higher than a threshold temperature and executes a second control process of adjusting the throttle of the expansion valve (34) to maintain super heat of the refrigerant at a constant value when the discharge temperature of the compressor (33) is lower than the threshold temperature,
wherein the super heat of the refrigerant is calculated as a difference of the suction temperature of the refrigerant sucked by the compressor (33) and the saturated temperature of the refrigerant,
**characterized in that**
the control unit (40) changes the threshold temperature according to the saturated vapor temperature of the refrigerant.

2. The air conditioner according to claim 1,
wherein the refrigerant is R32.

3. The air conditioner according to claim 1 or 2,
wherein the control unit lowers an operating frequency of the compressor (33) in the first control process so that the discharge temperature of the compressor (33) becomes the predetermined target value.

4. The air conditioner according to claim 3,
wherein, in a case where the operating frequency of the compressor (33) is controlled in a plurality of stages, the control unit (40) lowers the operating frequency of the compressor (33) by changing a control temperature that is threshold of the discharge temperature for dividing the plurality of stages.

5. The air conditioner according to claim 4,
wherein the control unit (40) changes the control temperature when the discharge temperature of the compressor (33) is equal to or higher than the target value even if the throttle of the expansion valve (34) is adjusted.

6. The air conditioner according to claim 4,
wherein the control unit changes (40) the control temperature according to a change of the threshold temperature.

## Patentansprüche

1. Klimagerät mit einer Inneneinheit (2) und einer Außeneinheit (3), wobei das Klimagerät aufweist:
einen Kompressor (33), der in der Außeneinheit (3) aufgenommen ist;
ein Expansionsventil (34) der Außeneinheit (3);
einen Ausstoßtemperatursensor (371), der eine Ausstoßtemperatur eines Kältemittels erfasst, das aus dem Kompressor (33) austritt;
einen Ansaugtemperatursensor (372), der die Ansaugtemperatur eines Kältemittels erfasst, das von dem Kompressor (33) angesaugt wird;
einen Sättigungsdampftemperatursensor (375), der eine Sättigungsdampftemperatur des Kältemittels erfasst;
eine Regeleinheit (40), die einen ersten Regelprozess zur Einstellung einer Drossel des Expansionsventils (34) ausführt, so dass die Ausstoßtemperatur des Kompressors (33) einen vorbestimmten Zielwert erreicht, wenn die Ausstoßtemperatur des vom Kompressor (33) ausgestoßenen Kältemittels gleich oder höher ist als eine Schwellentemperatur, und einen zweiten Regelvorgang zur Einstellung der Drossel des Expansionsventils (34)ausführt, um die Überhitzung des Kältemittels auf einem konstanten Wert zu halten, wenn die Ausstoßtemperatur des Kompressors (33) niedriger ist als die Schwellentemperatur liegt,
wobei die Überhitzung des Kältemittels berechnet wird als Differenz der Ansaugtemperatur des vom Kompressor (33) angesaugten Kältemittels und der Sättigungstemperatur des Kältemittels,
**dadurch gekennzeichnet, dass**
die Regeleinheit (40) die Schwellentemperatur in Abhängigkeit von der Sättigungsdampftemperatur des Kältemittels ändert.

2. Klimagerät nach Anspruch 1, wobei das Kältemittel R32 ist.

3. Klimagerät nach Anspruch 1 oder 2, wobei die Regeleinheit eine Betriebsfrequenz des Kompressors (33) in dem ersten Regelungsprozess senkt, so dass die Ausblastemperatur des Kompressors (33) den vorgegebenen Zielwert erreicht.

4. Klimagerät nach Anspruch 3, wobei in einem Fall, in dem die Betriebsfrequenz des Verdichters (33) in mehreren Stufen geregelt wird, die Regeleinheit (40) die Betriebsfrequenz des Verdichters (33) senkt, indem sie eine Regeltemperatur ändert, die eine Schwelle der Ausblastemperatur zur Unterteilung der mehreren Stufen ist.

5. Klimagerät nach Anspruch 4, wobei die Regeleinheit (40) die Regeltemperatur ändert, wenn die Ausblastemperatur des Kompressors (33) gleich oder höher als der Zielwert ist, auch wenn die Drossel des Expansionsventils (34) eingestellt wird.

6. Klimagerät nach Anspruch 4, wobei die Regeleinheit die Regeltemperatur entsprechend einer Änderung der Schwellentemperatur ändert (40).

## Revendications

1. Climatiseur avec une unité intérieure (2) et une unité extérieure (3), le climatiseur comprenant :
un compresseur (33) compris dans l'unité extérieure (3) ;
une vanne d'expansion (34) de l'unité extérieure (3) ;
un capteur de température de refoulement (371) qui détecte une température de refoulement d'un réfrigérant refoulé par le compresseur (33) ;
un capteur de température d'aspiration (372) qui détecte une température d'aspiration d'un réfrigérant aspiré par le compresseur (33) ;
un capteur de température de vapeur saturée (375) qui détecte une température de vapeur saturée du réfrigérant ;
une unité de commande (40) qui exécute un premier processus de commande consistant à ajuster un étranglement d'une vanne d'expansion (34) de sorte que la température de refoulement du compresseur (33) devienne une valeur cible prédéterminée lorsque la température de refoulement du réfrigérant refoulé par le compresseur (33) est égale ou supérieure à une température de seuil et exécute un deuxième processus de commande consistant à ajuster l'étranglement de la vanne d'expansion (34) pour maintenir une super chaleur du réfrigérant à une valeur constante lorsque la température de refoulement du compresseur (33) est inférieure à la température de seuil,
dans lequel la super chaleur du réfrigérant est calculée comme la différence entre la température d'aspiration du réfrigérant aspiré par le compresseur (33) et la température saturée du réfrigérant,
**caractérisé en ce que**
l'unité de commande (40) modifie la température de seuil en fonction de la température de vapeur saturée du réfrigérant.

2. Climatiseur selon la revendication 1,
dans lequel le réfrigérant est le R32.

3. Climatiseur selon la revendication 1 ou 2,
dans lequel l'unité de commande abaisse une fréquence de fonctionnement du compresseur (33) dans le premier processus de commande de sorte que la température de refoulement du compresseur (33) devienne la valeur cible prédéterminée.

4. Climatiseur selon la revendication 3,
dans lequel, dans un cas où la fréquence de fonctionnement du compresseur (33) est commandée en une pluralité d'étapes, l'unité de commande (40) abaisse la fréquence de fonctionnement du compresseur (33) en modifiant une température de commande qui est le seuil de la température de refoulement pour diviser la pluralité d'étapes.

5. Climatiseur selon la revendication 4,
dans lequel l'unité de commande (40) modifie la température de commande lorsque la température de refoulement du compresseur (33) est égale ou supérieure à la valeur cible même si l'étranglement de la vanne d'expansion (34) est ajustée.

6. Climatiseur selon la revendication 4,
dans lequel l'unité de commande (40) modifie la température de commande en fonction d'une modification de la température de seuil.
